# EUROPÄISCHE PATENTANMELDUNG

(11) **EP 1 460 268 A2**
(43) Veröffentlichungstag der Anmeldung: **22.09.2004**
(21) Anmeldenummer: 04006842.1
(22) Anmeldetag: 22.03.2004
(51) Int. Cl.: F04B 13/00

(54) **Dosierpumpe für mit Zusatzstoffen versetzte flüssige Medien**

(30) Priorität: 20.03.2003 DE 10312444
(71) Anmelder: SKP Konstruktion und Service GmbH, 88699 Frickingen (DE)
(72) Erfinder: Müller, Klaus, 88682 Salem/Beuren (DE)
(74) Vertreter: Koch, Günther, Dipl.-Ing.

(57) **Zusammenfassung**

Die Erfindung bezieht sich auf eine als Kolbenpumpe ausgebildete Dosierpumpe für Flüssigkeiten, die mit Zusatzstoffen aus Faserstoff versehen sind. Um die bei der Pumpe für den Ansaugvorgang und den Druckvorgang erforderlichen Ventilanordnungen gegen ein Zusetzen und Verstopfen durch die Zusatzstoffe zu verhindern, sind erfindungsgemäß die Ventilanordnungen mit einer Schneidvorrichtung kombiniert, die am Ventilsitz sich aufbauende Zusatzstoffe zerkleinert und in den Medienstrom zurückführt. Die Ventilanordnung ist vorzugsweise als Flachschieber ausgebildet, der an seiner Durchgangsöffnung mit scharfkantigen Schneiden ausgerüstet ist, die mit Schneidringen zusammenwirken, die in der Druckleitung bzw. der Saugleitung sitzen und den Flachschieber auf beiden Seiten führen. Der Flachschieber wird synchron zum Kolben der Dosierpumpe pneumatisch gesteuert.

## Beschreibung

Die Erfindung bezieht sich auf eine Dosierpumpe der im Oberbegriff des Patentanspruchs 1 angegebenen Gattung.

In der Bauindustrie werden Verbundmaterialien, bestehend aus Flüssigkeiten mit faserhaltigen Zusatzstoffen, benötigt, die den Baumaterialien in genau bemessenen Mengen zugesetzt werden müssen, um auf den Prozess der Aushärtung einzuwirken. Diese in Fässern angelieferten Verbundwerkstoffe wurden über Messgefäße durch Hand zugesetzt, was arbeits- und zeitaufwändig ist. Daher sind auch bereits automatisch arbeitende Dosierpumpen bekannt geworden, bei denen sich jedoch häufig an den als Kugelventil ausgebildeten Saug- und Druckventilen die fasrig ausgebildeten Zusatzstoffe ablagerten und den Strömungsquerschnitt verringerten und die Dichtwirkung der Ventile beeinträchtigten, so dass eine genaue Dosierung oft nach kurzem Gebrauch nicht mehr möglich war und eine Reinigung erfolgen musste.

Der vorliegenden Erfindung liegt die Aufgabe zugrunde, eine Dosierpumpe zu schaffen, die eine genaue Abmessung der durchströmenden, auch dickflüssigen, Verbundwerkstoffe gewährleistet und ein Zusetzen der Ventile verhindert.

Gelöst wird die gestellte Aufgabe durch die im Kennzeichnungsteil des Patentanspruchs 1 angegebenen Merkmale. Der Erfindung liegt demgemäß die Erkenntnis zugrunde, dass ein Zusetzen der abwechselnd zu öffnenden und zu schließenden Leitungen verhindert werden kann, wenn die Ventileinrichtungen mit Schneidvorrichtungen derart ausgestattet sind, dass am Ventilsitz ein "Abschneiden" der fasrigen Zusatzstoffe erfolgt.

Die erfindungsgemäße Dosierpumpe ist demgemäß nicht nur für die angegebenen Zwecke der Bauindustrie, sondern überall dort geeignet einzusetzen, wo Flüssigkeiten, auch mit hoher Viskosität behaftete Flüssigkeiten, Zusatzstoffe, insbesondere Faserstoffmaterial, enthalten, das sich leicht an Strömungswiderständen absetzt, die beispielsweise durch Ventilanordnungen in den Druck- und Saugleitungen bedingt sind.

Zweckmäßige Ausgestaltungen der Erfindung ergeben sich aus den Unteransprüchen. Insbesondere durch die konstruktive Lösung mittels eines Flachschiebers kann eine Ventilanordnung geschaffen werden, die praktisch keinen Strömungswiderstand im geöffneten Zustand bewirkt, wobei während der Öffnungsund Schließbewegung eine Selbstreinigung erfolgt, indem die Schneidkanten des Schiebers scherenartig mit den Schneidkanten der Schneidringe zusammenwirken, was das Festsetzen von Fremdkörpern im Bereich der Durchgangsöffnungen mit Sicherheit verhindert. Anstelle von Flachschiebern können die Ventile z.B. auch als Kugelhahn mit Schneidwirkung ausgebildet sein oder andere Konstruktionen aufweisen, die die gewünschte Schneidwirkung verursachen.

Nachstehend wird ein Ausführungsbeispiel der Erfindung anhand der Zeichnung beschrieben. In der Zeichnung zeigen:
Fig. 1 ist eine schematische Schnittansicht der erfindungsgemäßen Dosierpumpe in Ansaugstellung;
Fig. 2 ist eine Teilschnittansicht der Dosierpumpe gemäß Fig. 1 in Druckstellung;
Fig. 3 ist in größerem Maßstab gezeichnet eine Schnittansicht der in Saugund Druckleitung angeordneten Schieberventilanordnung.

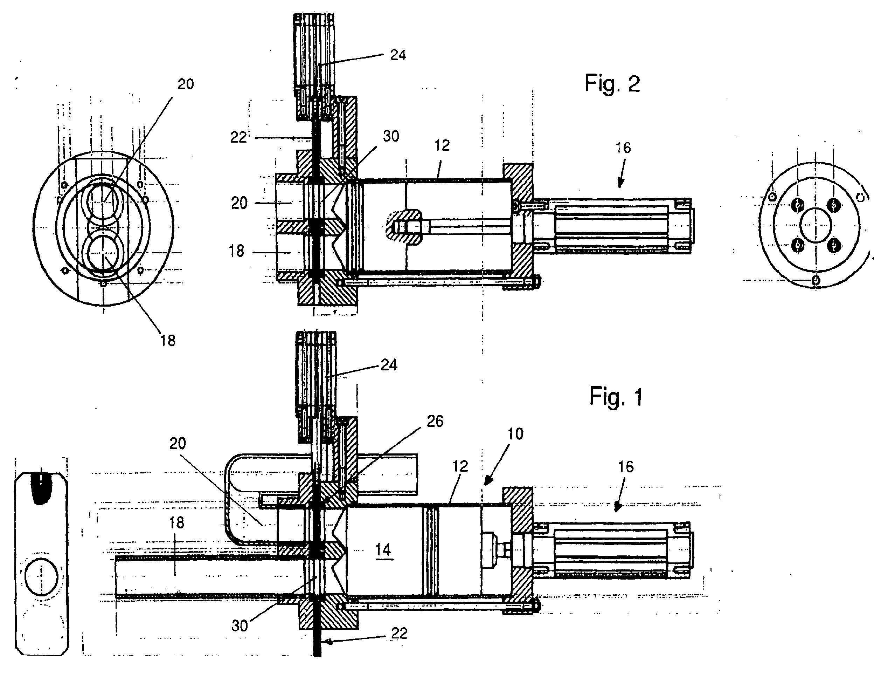

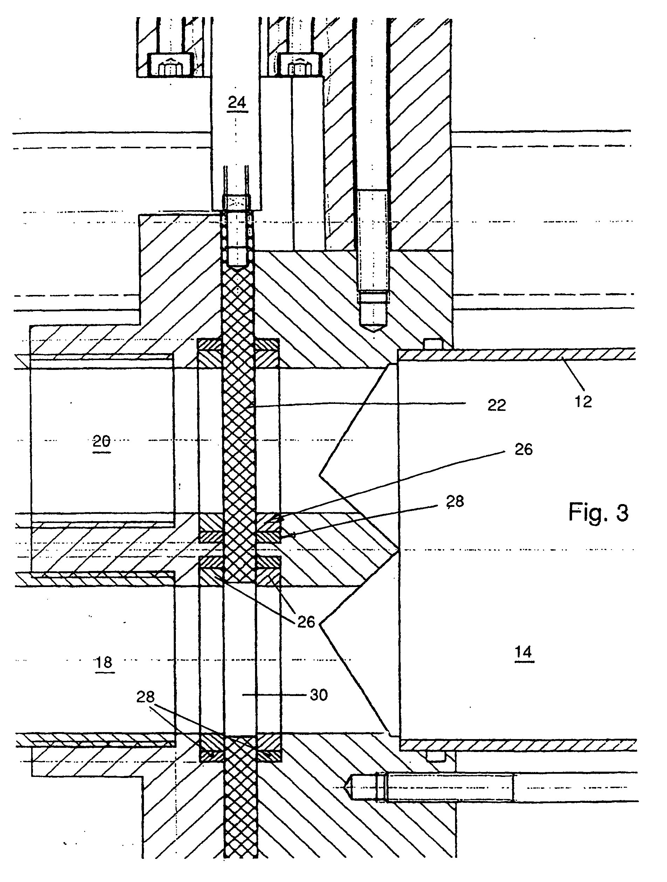

Die im Ausführungsbeispiel dargestellte Dosierpumpe ist als Kolbenpumpe 10 ausgebildet und weist einen in einem Zylinder 12 laufenden Dosierkolben 14 auf. Die Kolbenstange des Dosierkolbens 14 wird durch einen Pneumatikantrieb 16 gesteuert. In den Zylinderdeckel münden eine Ansaugleitung 18 und parallel hierzu eine Druckleitung 20. Die Öffnungs- und Schließbewegung der Ansaug- bzw. Druckleitung wird durch einen Flachschieber 22 gesteuert, der senkrecht zu den Leitungen 18 und 20 durch einen weiteren Pneumatikantrieb 24 synchron zur Kolbenbewegung gesteuert wird. In den Leitungen 18 und 20 sind als Ventilsitz jeweils zwei Schneidringe aus Stahl eingesetzt, deren Innendurchmesser mit der Innenwand der Leitungen 18, 20 fluchtet und zwischen denen der aus Stahl bestehende, den Ventilkörper bildende Flachschieber 22 geführt ist. Die Schneidringe 26 sind von Dichtungsringen 28 umschlossen. Der Flachschieber 22 weist eine Durchgangsöffnung 30 auf, deren Durchmesser etwas größer ist als der Innendurchmesser der Schneidringe 26. Die Ränder der Durchgangsöffnung 30 sind scharfkantig ausgebildet und bilden zusammen mit den Schneidringen 26 eine scherenartige Schneidvorrichtung, die Zusatzstoffe der durchströmenden Medien, beispielsweise Aramid-Fasern, schneidet und damit ein Zusetzen der Ventilöffnungen mit Sicherheit verhindert. Während des Ansaugvorganges befindet sich die Durchgangsöffnung 30 in der Ansaugleitung 18 (Fig. 1 und Fig. 3), wobei die Druckleitung 20 abgesperrt ist, und beim Ausstoßen des Mediums liegt die Durchgangsöffnung 30 in der Druckleitung, und der Schieber sperrt die Ansaugleitung 18 ab.

### Bezugszeichenliste

- 10: Kolbenpumpe
- 12: Zylinder
- 14: Dosierkolben
- 16: Pneumatikantrieb
- 18: Ansaugleitung
- 20: Druckleitung
- 22: Flachschieber
- 24: Pneumatikantrieb
- 26: Schneidringe
- 28: Dichtungsringe
- 30: Durchgangsöffnung

## Patentansprüche

1. Dosierpumpe (10) für mit Zusatzstoffen versetzte flüssige Medien mit einer Ansaugleitung (18) und einer Druckleitung (20), in denen Absperrventile angeordnet sind, die abwechselnd geöffnet und geschlossen werden,
**dadurch gekennzeichnet, dass** der Ventilkörper (22) und/oder die Ventilsitze der Absperrventile Mittel aufweisen, die eine Schneidwirkung auf die Zusatzstoffe des hindurchströmenden Mediums ausüben.

2. Dosierpumpe nach Anspruch 1,
**dadurch gekennzeichnet, dass** die Ventile als Flachschieber ausgebildet sind.

3. Dosierpumpe nach Anspruch 2,
**dadurch gekennzeichnet, dass** Ansaugleitung (18) und Druckleitung (20) parallel zueinander angeordnet sind und der Flachschieber (22) mit einer Durchgangsöffnung (30) senkrecht zu diesen Leitungen verläuft.

4. Dosierpumpe nach Anspruch 3,
**dadurch gekennzeichnet, dass** der Flachschieber (22) in Schneidringen (26) geführt ist, die in den Leitungen (18, 20) angeordnet sind und eine mit der Innenwand der Leitungen fluchtende Innenwand mit scharfen Schneidkanten aufweist.

5. Dosierpumpe nach den Ansprüchen 3 und 4,
**dadurch gekennzeichnet, dass** die Durchgangsöffnung (30) des Flachschiebers (22) mit scharfen Schneidkanten ausgerüstet ist, die mit den Schneidkanten der Schneidringe (26) zusammenwirken.

6. Dosierpumpe nach Anspruch 5,
**dadurch gekennzeichnet, dass** Flachschieber (22) und Schneidringe (26) aus Stahl, vorzugsweise aus rostfreiem Stahl, bestehen.

7. Dosierpumpe nach den Ansprüchen 3 bis 6,
**dadurch gekennzeichnet, dass** der Durchmesser der Durchgangsöffnung (30) des Flachschiebers (22) größer ist als der Innendurchmesser der ihn begrenzenden und führenden Schneidringe.

8. Dosierpumpe nach Anspruch 4,
**dadurch gekennzeichnet, dass** die Schneidringe (26) durch Dichtungsringe (28) gegenüber dem Leitungsgehäuse abgedichtet sind.

9. Dosierpumpe nach einem der Ansprüche 1 bis 8,
**dadurch gekennzeichnet, dass** die Dosierpumpe als Kolbenpumpe ausgebildet ist und dass Saugleitung (18) und Druckleitung (20) im Zylinderdeckel ausgebildet sind.

10. Dosierpumpe nach einem der Ansprüche 1 bis 9,
**dadurch gekennzeichnet, dass** der Dosierkolben (14) der Kolbenpumpe und/oder der Flachschieber (22) pneumatisch angetrieben sind und dass Schieberantrieb und Kolbenantrieb synchron gesteuert sind.
